(19) Europäisches Patentamt
European Patent Office
Office européen des brevets

(11) Veröffentlichungsnummer: **0 287 516 B1**

(12) **EUROPÄISCHE PATENTSCHRIFT**

(45) Veröffentlichungstag der Patentschrift: **31.03.93**

(51) Int. Cl.$^5$: **C09J 4/02**, C08F 220/12, C08F 299/02

(21) Anmeldenummer: **88810230.8**

(22) Anmeldetag: **08.04.88**

# (54) Klebstoffe.

(30) Priorität: **14.04.87 CH 1439/87**

(43) Veröffentlichungstag der Anmeldung:
**19.10.88 Patentblatt 88/42**

(45) Bekanntmachung des Hinweises auf die Patenterteilung:
**31.03.93 Patentblatt 93/13**

(84) Benannte Vertragsstaaten:
**CH DE FR GB IT LI NL**

(56) Entgegenhaltungen:
**EP-A- 0 044 166**
**EP-A- 0 095 182**
**EP-A- 0 119 525**
**EP-A- 0 138 754**

(73) Patentinhaber: **CIBA-GEIGY AG**
**Klybeckstrasse 141**
**CH-4002 Basel(CH)**

(72) Erfinder: **Manser, Aloysius Hubertus**
**Feldstrasse 93**
**CH-4123 Allschwil(CH)**

EP 0 287 516 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft photopolymerisierbare Klebstoffe enthaltend α-Aminoacetophenonderivate als Photoinitiatoren und Thioxanthonderivate als Photosensibilisatoren, die Verwendung dieser Klebstoffe als im UV- und/oder sichtbaren Bereich härtende Kleber und ein Verfahren zur Verklebung von Oberflächen.

Photopolymerisierbare Klebstoffe verschiedener Zusammensetzung sind bekannt. Die Verwendung photopolymerisierbarer Klebstoffe gewinnt ständig an Bedeutung, da diese im Vergleich zu wärmehärtbaren Klebstoffen sowohl Energieeinsparungen als auch eine schnellere Herstellung von Klebeverbindungen ermöglichen. Ein potentielles Anwendungsgebiet photopolymerisierbarer Klebstoffe liegt bei der Verklebung UV-durchlässiger und/oder für sichtbare Strahlung durchlässiger Stoffe, wie z.B. verschiedener Kunststoffolien, mit undurchsichtigen Stoffen, wie Karton, Metalle usw. Solche Klebeverbindungen werden z.B. bei der Herstellung von Blisterverpackungen, ID-Karten oder Kreditkarten angefertigt. Der grösste Anteil dieser Verklebungen wird heute aber immer noch unter Verwendung von wärmehärtbaren Klebstoffen hergestellt.

Die CH Patentschrift 560 594 beschreibt ein Verfahren zur Herstellung von Verbundstoffen, zum Beispiel von Verpackungen, unter Verwendung photohärtbarer Klebstoffe, zum Verkleben eines lichtdurchlässigen Materials mit einem lichtundurchlässigen Material. Die verwendeten Klebstoffe enthalten vorzugsweise einen ungesättigten Polyester und einen Acrylatester und können auch einen Polymerisationsbeschleuniger,z.B. ein organisches Cobaltsalz oder ein tertiäres Amin, und einen Photosensibilisator, wie z.B. Propiophenon- oder Naphthalinderivate, enthalten.

Die CH Patentschrift 655 476 beschreibt ein Verfahren zur Verklebung von Blisterverpackungen unter Verwendung eines mittels UV-Strahlen härtbaren Klebers, enthält aber keine Hinweise über die Zusammensetzung des Klebers.

Blisterverpackungen sowie ID-Karten und Kreditkarten [vgl. Kunststoffe 77, 880 (1987)] werden üblicherweise aus PVC-Folien hergestellt, wobei auch aus Umweltschutzgründen, dieses Material immer mehr durch andere Polymerarten, wie z.B. Polystyrol, Polyacrylnitril, Polyethylenterephthalat, Polyamide, Polyolefine oder Polycarbonate, ersetzt wird. Während PVC UV-Strahlung erst im kürzerwelligen Bereich absorbiert (60 % Transmission bei ca. 300 nm), sind die anderen erwähnten Polymere zum Teil auch für längerwellige UV-Strahlung undurchlässig. Eine Folge davon ist, dass handelsübliche UV-Kleber bei Verwendung solcher Folienmaterialen eine starke Verzögerung der Polymerisationsgeschwindigkeit sowie Mängel bei der Haftung aufweisen. Diese Probleme können durch Verwendung bestimmter Stoffgemische mit geeigneten Photoinitiatoren und Photosensibilisatoren gelöst werden.

Gegenstand der vorliegenden Erfindung sind photopolymerisierbare Klebstoffe enthaltend

(a) 10 bis 60 Gewichtsteile eines oligomeren (Meth)Acrylats, wobei das oligomere Acrylat oder Methacrylat (a) mindestens eine, insbesondere mindestens zwei, Gruppen der Formel I

$$CH_2{=}\overset{R}{\overset{|}{C}}{-}COO{-} \qquad \text{(I) enthält,}$$

worin R Wasserstoff oder Methyl bedeutet, und welches ein Polyether-Acrylat, ein Polyester-Acrylat, ein Polyester-UrethanAcrylat, ein Epoxidecrylat und insbesondere ein Urethan-Acrylat ist,

(b) 10 bis 50 Gewichsteile eines monomeren (Meth)Acrylats, wobei das monomere Acrylat oder Methacrylat (b) mindestens eine Gruppe der Formel I enthält und sich von aliphatischen, cycloaliphatischen, alicycloaliphatischen, araliphatischen oder heterocyclisch-aliphatischen ein- oder mehrwertigen Alkoholen; von Hydroxycarbonsäuren; von Hydroxyalkylaminen oder von Hydroxyalkylnitrilen ableitet.

(c) 5 bis 40 Gewichtsteile eines Flexibilisators,

(d) 0,1 bis 10 Gewichtsteile eines Silan-Haftvermittlers,

(e) 0,5 bis 10 Gewichtsteile eines α-Aminoacetophenonderivats als Photoinitiator und

(f) 0,01 bis 5 Gewichtsteile eines Thioxanthonderivats als Photosensibilisator,

wobei sich die Gesamtmenge der Komponenten (a) bis (f) und allenfalls weiterer Zusätze auf 100 Gewichtsteile ergänzt.

Weitere Gegenstände der Erfindung sind die Verwendung der definitionsgemässen Klebstoffe als im UV- und/oder im sichtbaren Bereich photohärtende Kleber sowie ein Verfahren zum Verkleben zweier oder mehrerer Substrate, wovon mindestens ein Substrat für UV- und/oder sichtbares Licht durchlässig ist, wobei

(i) der erfindungsgemässe Klebstoff auf mindestens eine der zu verklebenden Oberflächen aufgetragen wird,

(ii) die zu verklebenden Oberflächen miteinander kontaktiert werden,

(iii) die Anordnung gegebenenfalls zusammengepresst wird und

(iv) die Verklebung mittels Bestrahlung durch das für Strahlen durchlässige Material ausgehärtet wird.

Das erfindungsgemässe Verfahren eignet sich insbesondere zur Herstellung von Blisterverpackungen, ID-Karten und Kreditkarten.

Die bevorzugten Mengen der Komponenten (a) bis (f) der erfindungsgemässen Stoffgemische sind 15 bis 40 Gewichtsteile der Komponente (a); 20 bis 40 Gewichtsteile der Komponente (b); 10 bis 30 Gewichtsteile der Komponente (c); 0,5 bis 5 Gewichtsteile der Komponente (d); 1 bis 6 Gewichtsteile der Komponente (e) und 0,1 bis 3 Gewichtsteile der Komponente (f), wobei sich die Gesamtmenge der Komponenten (a) bis (f) und allenfalls weiterer Zusätze auf 100 Gewichtsteile ergänzt.

Die erfindungsgemässen Komponenten (a) und (b), d.h., die oligomeren bzw. monomeren (Meth)-Acrylate, sind Ester der Acryl- oder der Methacrylsäure.

Geeignete Verbindungen der erwähnten Art sind dem Fachmann bekannt und können auf bekannte Weise hergestellt werden. Sie sind z.B. in den US 3,380,831, US 3,297,745, US 4,129,488, und US 3,586,526 bis '530 beschrieben. Solche Produkte sind auch im Handel erhältlich. Urethan-Acrylate werden beispielsweise unter der Bezeichnung EBECRYL® (UCB, Belgien) oder Uvithane® (Morton Thiokol, U.S.A.) angeboten. Sie werden z.B. durch Verkappung isocyanat-endständiger Prepolymere mit Hydroxyalkylacrylaten hergestellt. Das Molekulargewicht solcher Oligomere liegt im allgemeinen im Bereich von 500 bis 5000, insbesondere 1000 bis 2000, aber es werden auch Produkte mit tieferen Molekulargewichten als auch mit Molekulargewichten bis etwa 10000 verwendet.

Besonders bevorzugt als Komponente (b) sind Alkyl-, Hydroxyalkyl- oder insbesondere Cycloalkylacrylate oder -methacrylate.

Im allgemeinen werden als erfindungsgemässe Komponenten (a) und (b) Acrylatester vor den Methacrylaten bevorzugt.

Die monomeren (Meth)Acrylate (b) können eine oder mehrere Doppelbindungen aufweisen. Geeignete monomere Verbindungen sind z.B. Methyl-, Ethyl-, n-Propyl-, n-Butyl-, Isobutyl-, n-Hexyl-, 2-Ethylhexyl-, n-Octyl-, n-Decyl- und n-Dodecylacrylat und -methacrylat, 2-Hydroxyethyl-, 2- und 3-Hydroxypropylacrylat und -methacrylat, 2-Methoxyethyl-, 2-Ethoxyethyl- und 2- oder 3-Ethoxypropylacrylat und -methacrylat, Allylacrylat und -methacrylat, Glycidylacrylat und -methacrylat, Cyclopentyl- und Cyclohexylacrylat und -methacrylat, Acrylsäure- und Methacrylsaurephenylester, Ethylenglykoldiacrylat, Ethylenglykoldimethacrylat, Diethylenglykoldiacrylat, Diethylenglykoldimethacrylat, Triethylenglykoldiacrylat, Triethylenglykoldimethacrylat, Tetraethylenglykoldiacrylat, Tetraethylenglykoldimethacrylat, 1,1,1-Trimethylolethantriacrylat, 1,1,1-Trimethylolethantrimethacrylat, 1,1,1-Trimethylolpropantriacrylat, 1,1,1-Trimethylolpropantrimethacrylat, Glycerintriacrylat, Glycerintrimethacrylat, Pentaerythritdiacrylat, Pentaerythritdimethacrylat, Pentaerythrittriacrylat, Pentaerythrittrimethacrylat, Pentaerythrittetraacrylat und Pentaerythrittetramethacrylat, Butandiol-1,3-diacrylat, Butandiol-1,3-dimethacrylat, Butandiol-1,4-diacrylat, Butandiol-1,4-dimethacrylat, Hexandiol-1,6-diacrylat, Hexandiol-1,6-dimethacrylat, Propandiol-1,3-diacrylat, Propandiol-1,3-dimethacrylat, Octandiol-1,8-diacrylat, Octandiol-1,8-dimethacrylat, Dodecandiol-1,12-diacrylat, Dodecandiol-1,12-dimethacrylat, Tetrahydrofurfuryl-, Isobornyl- und Dicyclopentenyloxyethylacrylat und -methacrylat.

Die einfach ungesättigten (Meth)Acrylate fungieren als reaktive Verdünner. Falls erwünscht, können aber die erfindungsgemässen Stoffgemische noch weitere Reaktionsverdünner ohne (Meth)Acrylatgruppen, insbesondere 1-Vinyl-2-pyrrolidon, enthalten.

Die Menge des gegebenenfalls zusätzlich verwendeten Reaktivverdünners liegt geeigneterweise im Bereich von 0 bis 30, insbesondere 10 bis 20, Gewichtsteilen, bezogen auf die eingangs definierten Mengen der Komponenten (a) bis (f).

Die polymerisierbaren Monomeren oder Gemische dieser Monomeren dürfen bei Raumtemperatur nicht gasförmig sein; sie sollen also flüssig, fest, halbfest oder pastenförmig sein.

Die erfindungsgemässen Klebstoffe enthalten als Komponente (c) einen Flexibilisator. Es kann sich dabei um einen Thermoplasten, einen thermoplastischen Kautschuk oder um ein Elastomer handeln.

Die Zugabe solcher Komponenten zur Erhöhung der Klebkraft der Mischung ist an sich bekannt. In der Regel müssen solche Polymere polare oder funktionelle Gruppen tragen. Diese können als Endgruppen vorliegen und/oder in das Molekülgerüst eingebaut sein.

Vorzugsweise wird der Thermoplast, der thermoplastische Kautschuk oder das Elastomer ausgewählt aus der Gruppe bestehend aus Polyacetal, Polyacrylat, Polymethacrylat, Polystyrol, Polyamid, Polyurethan, Polyvinylchlorid, Polyester (gesättigt oder ungesättigt), Polyvinylacetat, Polyvinylalkohol, Polyvinylpyrrolidon, Celluloseester, Polybutadien, Polyisopren oder aus Copolymeren aus Styrol und Acrylat bzw. aus Styrol und Methacrylat, aus Styrol und Butadien oder aus Styrol und Isopren oder aus Terpolymeren aus Styrol, Butadien und Acrylnitril.

Bevorzugte Flexibilisatoren sind Elastomere oder thermoplastische Kautschuke, insbesondere Polybutadiene, Polyisoprene, Copolymere aus Styrol und Acrylat bzw. aus Styrol und Methacrylat, aus Styrol und Butadien, aus Styrol und Isopren, aus Butadien und Acrylnitril oder Terpolymere aus Styrol, Butadien und Acrylnitril.

Besonders bevorzugt werden Nitrilkautschuke, beispielsweise Polymere vom Typ KRNYAC® der Firma Polysar, mit funktionellen und/oder polaren Gruppen terminierte Polybutadien-Acrylnitril Polymere, wie beispielsweise Polymere vom Typ HYCAR® der Firma Goodrich, insbesondere die vinylterminierten Typen davon, oder modifizierte 1,2-Polybutadiene, wie beispielsweise Polymere vom Typ NISSO® PB der Firma Nippon Soda, insbesondere die urethan-, maleinsäure-, hydroxyl- oder carboxylmodifizierten Typen.

Ganz besonders bevorzugt enthält der Flexibilisator (c) vinylendständige Gruppen und ist insbesondere ein vinylendständiges Butadien-Acrylnitril-Polymer.

Eine Vielzahl von Silan-Haftvermittlern ist dem Fachmann bekannt. Die Verwendung solcher Verbindungen in Klebstoffen ist beispielsweise von G. Habenicht, "Kleben", Seiten 70-73, Springer Verlag, Berlin 1986 beschrieben.

Bevorzugte Haftvermittler (d) sind Verbindungen der Formel II

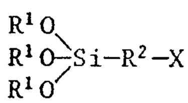 (II),

worin $R^1$ unabhängig voneinander eine $C_1$-$C_4$-Alkyl- oder eine $C_3$-$C_{10}$-Alkoxyalkylgruppe, $R^2$ eine direkte Bindung oder eine $C_2$-$C_6$-Alkylengruppe und X einen reaktiven Rest ausgewählt aus den Gruppen $CH_2=CH$-,

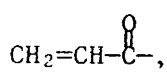, 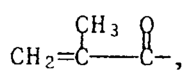,

HS-, $H_2N$-, $H_2NCH_2CH_2NH$-, HO-,

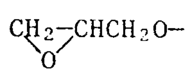 und 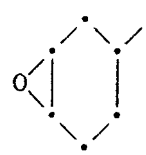

bedeuten.

Solche Verbindungen sind auf dem Markt z.B. von der Fa. Union Carbide U.S.A. erhältlich. Besonders bevorzugte Haftvermittler sind Verbindungen, die eine Glycidoxygruppe enthalten, insbesondere $\gamma$-Glycidoxypropyltrimethoxysilan. Es können auch Imidgruppen enthaltende Silane der in der DE-OS 29 34 550 beschriebenen Art verwendet werden.

Als Photoinitiator (e) werden in den erfindungsgemässen Klebstoffen $\alpha$-Aminoacetophenonderivate verwendet. Diese Verbindungen sind aus der EP-A 3 002 als Photoinitiatoren für ethylenisch ungesättigte Verbindungen bekannt. Verbindungen, die in 4-Stellung des Phenylrestes einen Schwefel, Sauerstoff oder Stickstoff enthaltenden Substituenten aufweisen, sind in den EP-A-88 050, EP-A 117 233 und EP-A-138 754 als Photoinitiatoren für pigmentierte photohärtbare Systeme, beispielsweise für UV-härtbare Druckfarben, beschrieben.

Bevorzugte Photoinitiatoren (e) sind Verbindungen der Formel III

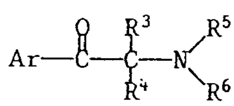 (III),

worin Ar eine unsubstituierte oder durch einen oder mehrere der Reste Halogen, Hydroxyl, $C_1$-$C_4$-Alkyl, $C_1$-$C_4$-Alkoxy, $C_1$-$C_4$-Alkylthio, $C_1$-$C_4$-Alkylamino oder $C_1$-$C_4$-Dialkylamino oder N-Morpholino substituierte $C_6$-

$C_{14}$-Arylgruppe, $R^3$ und $R^4$ unabhängig voneinander Wasserstoff, $C_1$-$C_8$-Alkyl, $C_5$-$C_6$-Cycloalkyl, $C_7$-$C_9$-Phenylalkyl und $R^5$ und $R^6$ unabhängig voneinander Wasserstoff, ein gegebenenfalls durch $C_1$-$C_4$-Alkoxygruppen substituierten $C_1$-$C_8$-Alkyl, $C_5$-$C_6$-Cycloalkyl, $C_7$-$C_9$-Phenylalkyl sind oder $R^5$ und $R^6$ zusammen $C_3$-$C_7$-Alkylen bedeuten, das durch -O-, -S- oder -N($R^7$)- unterbrochen sein kann, und $R^7$ Wasserstoff oder $C_1$-$C_4$-Alkyl ist.

Besonders bevorzugt sind Verbindungen der Formel III, worin Ar für p-N-Morpholino-, p-$C_1$-$C_4$-Alkoxy- oder p-$C_1$-$C_4$-Alkylthiophenyl, insbesondere für p-Methoxy- oder p-Methylthiophenyl steht, $R^3$ und $R^4$ unabhängig voneinander $C_1$-$C_4$-Alkyl oder Benzyl und $R^5$ und $R^6$ jeweils Methyl oder zusammen mit dem Stickstoffatom, an das sie gebunden sind, einen N-Morpholinorest bedeuten.

Beispiele geeigneter Photoinitiatoren sind:

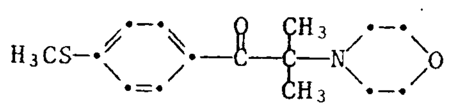
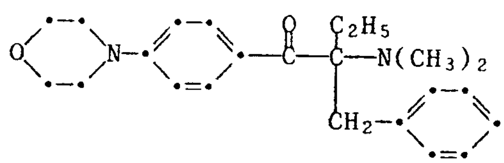

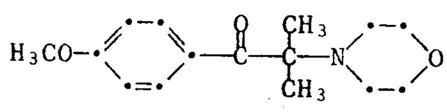
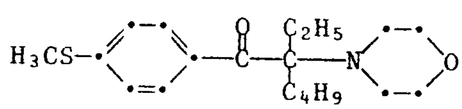

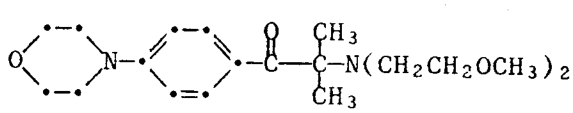
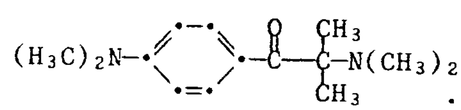

Die erfindungsgemässen Klebstoffe enthalten Thioxanthonderivate als Photosensibilisatoren (f). Geeignete Thioxanthonderivate sind z.B. die in der DE-OS 2 811 755, der DE-OS 3 018 891, der EP-A 33 720 und der EP-A 167 489 beschriebenen substituierten Thioxanthone. Bevorzugt werden Thioxanthone, welche durch ein oder mehrere Halogenatome, durch eine oder mehrere $C_1$-$C_{12}$-Alkyl- oder $C_1$-$C_{12}$-Alkoxycarbonylgruppen substituiert sind.

Thioxanthon-Photosensibilisatoren werden z.B. auch unter der Bezeichnung Quantacure® (Ward-Blenkinsop, Middlesex, GB) oder Kayacure® (Nippon Kayaku, Japan) angeboten.

Geeignete Thioxanthonderivate sind z.B.:

2-Isopropylthioxanthon, 2-Chlorthioxanthon, 2,4-Dimethylthioxanthon, 2,4-Diethylthioxanthon, 2-Dodecylthioxanthon, 1-Methoxycarbonylthioxanthon, 2-Ethoxycarbonylthioxanthon, 3-(2-Methoxyethoxycarbonyl)-thioxanthon, 4-Butoxycarbonylthioxanthon, 3-Butoxycarbonyl-7-methylthioxanthon, 1-Cyano-3-chlorthioxanthon, 1-Ethoxycarbonyl-3-chlorthioxanthon, 1-Ethoxycarbonyl-3-ethoxythioxanthon, 1-Ethoxycarbonyl-3-aminothioxanthon, 1-Ethoxycarbonyl-3-phenylsulfurylthioxanthon, 3,4-Di-[2-(2-methoxyethoxy)ethoxycarbonyl]-thioxanthon, 1-Ethoxycarbonyl-3-(1-methyl-1-morpholinoethyl)thioxanthon, 2-Methyl-6-ethoxy-carbonylthioxanthon, 2-Methyl-6-dimethoxymethylthioxanthon, 2-Methyl-6-(1,1-dimethoxybenzyl)thioxantpon, 2-Morpholinomethylthioxanthon und 2-Methyl-6-morpholinomethylthioxanthon.

In den erfindungsgemässen Klebstoffen können jeweils auch Gemische verschiedener Komponenten (a) bis (f) eingesetzt werden.

Als weitere übliche Zusätze können die erfindungsgemässen Gemische ferner Weichmacher, Verstärkungsmittel, wie beispielsweise Glasfasern, Borfasern, mineralische Silikate, Quarzmehl, Aluminiumoxidhydrat oder Aluminiumpulverplättchen, ferner Pigmente und Farbstoffe, wie z.B. Titandioxid, Thixotropiemittel, Verlaufmittel ("flow control agents"), wie Silicone, Wachse und Stearate, Antioxidantien und Lichtschutzmittel, insbesondere vom Typ der sterisch gehinderten Amine (HALS), enthalten.

Die erfindungsgemässen Klebstoffe eignen sich als photohärtbare Klebstoffe. Durch die Verwendung der speziellen Photoinitiator/Photosensibilisator-Kombination ist auch eine Härtung mit Strahlen im längerwelligen UV- und/oder im sichtbaren Bereich des Spektrums sowie bei Tageslicht (d.h. ohne künstliche Lichtquelle) möglich, so dass auch UV-Strahlen absorbierende Materialien, wie z.B. verschiedene Kunststoffe, und anorganische Gläser innerhalb kurzer Zeit verklebt werden können.

Die Applikation des Klebstoffgemisches erfolgt auf an sich bekannte Weise. Die Schichtdicke der Klebefilme beträgt dabei im allgemeinen nicht mehr als 500 µm, vorzugsweise 40 bis 120 µm. Es können aber falls zweckmässig auch wesentlich dickere Schichten durch Bestrahlung ausgehärtet werden.

Vor der Beschichtung mit dem Klebstoffgemisch können die zu verklebenden Oberflächen, falls zweckmässig, entfettet und aufgerauht werden.

Nach dem Zusammenfügen der beschichteten Oberflächen werden diese gegebenenfalls zusammengepresst oder verklammert und durch Bestrahlung durch das mindestens teilweise im UV-Bereich durchlässige Material gehärtet. Die Härtung erfolgt je nach Lichtquelle, dem zu verklebenden Material und verwendetem Klebstoff im allgemeinen innerhalb von etwa 0,1-30 Sekunden.

Als Lichtquellen für die Bestrahlung der Klebeverbindungen kommt eine grosse Anzahl der verschiedensten Typen zur Anwendung. Es sind sowohl Punktquellen als auch flächenförmige Strahler (Lampenteppiche) geeignet. Beispiele sind: Kohlelichtbogenlampen, Xenon-Lichtbogenlampen, Quecksilberdampflampen, gegebenenfalls mit Metall-Halogeniden dotiert (Metall-Halogenlampen), Fluoreszenzlampen, Argonglühlampen, Elektronenblitzlampen und photographische Flutlichtlampen. Die Härtung kann wie erwähnt auch bei Tageslicht durchgeführt werden.

Der Abstand zwischen Strahlenquelle und erfindungsgemässem Klebstoffe kann je nach Anwendungszweck und Strahlenquelle bzw. -stärke variieren, z.B. zwischen <1 cm bis 150 cm, vorzugsweise zwischen 3 cm bis 30 cm. Es versteht sich von selber, dass bei der Härtung bei Tageslicht, die Strahlenquelle naturgemäss weiter entfernt ist.

Als zu verklebende Oberflächen eignen sich solche aus Metallen, wie Stahl, Aluminium und seinen Legierungen, z.B. mit Magnesium oder Silicium, Kupfer und seinen Legierungen, von sogenannten Zincrometall (eine Zink-Chrom-Legierung), von polaren polymeren Materialien, wie Polyamiden, Polyurethanen, Polyestern, von glasfaserverstärkten Kunststoffen, Holz, Glas, Keramik, Papier und Oberflächen, die mit Anstrichen versehen sind. Der Klebstoff kann auch für die Verklebung zweier verschiedenartiger Materialien verwendet werden, wie z.B. von Karton oder Metallen mit Beschichtungsfolien. Die einzige Voraussetzung ist, dass mindestens eines der Materialien für UV- bzw. sichtbare Strahlen mindestens teilweise durchlässig ist. Einige Beispiele für die Anwendung der erfindungsgemässen Klebstoffe sind: Herstellung von Blisterverpackungen, Verklebung von Kunststoffolien zu ID-Karten, Kreditharten oder Cheque-Karten, Verklebung von Glühbirnen, Verklebung von optischen Teilen, wie Linsen oder Lichtleitern (optical bonding) usw.

Herstellung der Klebstoffe

Die in den Ausführungsbeispielen verwendeten Gemische werden wie folgt hergestellt: Die Komponenten werden jeweils in einem Dissolver zusammengemischt und bei 50 bis 60 °C während höchstens 15 min homogenisiert.

Beispiel 1

24 Gewichtsteile eines aliphatischen Urethanacrylates (EBECRYL® 270 der Fa. UCB, Belgien)

35 Gewichtsteile Isobornylacrylat

20 Gewichtsteile 1-Vinyl-2-pyrrolidon

20 Gewichtsteile eines vinylendständigen Butadien-Acrylnitril-Polymers (Hycar® VTBNX 1300X23 der Fa. BF Goodrich, U.S.A.)

1 Gewichtsteil γ-Glycidoxypropyltrimethoxysilan (Union Carbide Corp., U.S.A.)

3 Gewichtsteile eines Photoinitiators der Formel

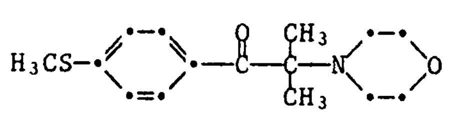

0,25 Gewichtsteile 2,4-Diethylthioxanthon

Zur Bestimmung der Haftfestigkeit verschiedener Kunststoffolien auf weissem Karton wird mit einem Rakel auf die Folie ein 50 bis 100 µm dicker Klebefilm des Gemisches aufgetragen und der Karton wird aufgelegt. Nach Umdrehen des Prüflings wird er mit einer 8 mm dicken Fensterglasscheibe belastet. Die Härtung erfolgt durch Bestrahlen der Proben durch die Glassplatte mit einer Hochdruckquecksilberdampflampe von 80 W/cm in einem Minicure-Prüfgerät in einem Abstand von 5 bis 7 cm. Dabei wird durch Variieren der Fördergeschwindigkeit die minimale Belichtungszeit bestimmt, welche zur Erreichung einer genügenden Haftung benötigt wird. Die Haftung wird als genügend bewertet, wenn ein Ablösen der Folie vom Karton ohne teilweise Beschädigung des Kartons nicht mehr möglich ist.

| Bestrahlungszeit (s) | Folienmaterial PVC (0,35 mm) | Polystyrol (0,4 mm) |
|---|---|---|
| 2,10 | sehr gut | sehr gut |
| 1,05 | sehr gut | gut |
| 0,50 | sehr gut | genügend |
| 0,20 | sehr gut | genügend |

Beispiel 2

Beispiel 1 wird wiederholt, indem das Gemisch statt 2,4-Diethylthioxanthon 2-Isopropylthioxanthon enthält.
Die Haftfestigkeit verschiedener Folien auf blaubedrucktem Karton wird wie im Beispiel 1 beschrieben bestimmt.

| Folienmaterial | Fördergeschwindigkeit (m/min) | Bestrahlungszeit (s) |
|---|---|---|
| PVC (0,35 mm) | 60 | 0,35 |
| PVC (UV-stabilisiert, 0,20 mm) | 20 | 1,05 |
| Polystyrol (0,30 mm) | 30 | 0,75 |
| Polyacrylnitril (0,30 mm) | 30 | 0,75 |
| Polyethylenterephthalat (0,40 mm) | 40 | 0,52 |

Beispiel 3

Beispiel 2 wird wiederholt. Die Haftfestigkeit verschiedener Folien auf braun bedrucktem Karton wird wie im Beispiel 1 beschrieben bestimmt.

| Folienmaterial | Bestrahlungszeit (s) |
|---|---|
| PVC (0,35 mm) | 0,50 |
| PVC (UV-stabilisiert, 0,20 mm) | 1,00 |
| Polystyrol (0,30 mm) | 1,00 |
| Polyacrylnitril (0,30 mm) | 0,75 |

Beispiel 4

| | |
|---|---|
| 40 | Gewichtsteile des im Beispiel 1 verwendeten Urethanacrylats |
| 27 | Gewichtsteile Isobornylacrylat |
| 12 | Gewichtsteile 1-Vinyl-2-pyrrolidon |
| 20 | Gewichtsteile des im Beispiel 1 verwendeten Butadien-Acrylnitril-Polymers |
| 1 | Gewichtsteil $\gamma$-Glycidoxypropyltrimethoxysilan |
| 3 | Gewichtsteile des im Beispiel 1 verwendeten Photoinitiators |
| 0,25 | Gewichtsteile 2-Isopropylthioxanthon |

Zur Bestimmung der Zugscherfestigkeit von Glas/Kunststoff-VerKlebungen wird der Klebstoff manuell auf zwei nebeneinanderliegende ca. 3-4 mm dicke Kunststoffplatten aufgetragen und diese werden mit einer 8 mm dicken Fensterglasplatte verklebt (Ueberlappungsfläche 2 × 12,5 × 25 mm). Die Härtung erfolgt durch Bestrahlung der Probe durch die Glasplatte in einem Minicure-Gerät mit einer Hochdruckquecksilberdampflampe von 80 W/cm in einem Abstand von 6 bis 7 cm. Die Transportgeschwindigkeit beträgt 5 m/min, was einer Belichtungszeit von 4,2 s entspricht. Nach dem Bestrahlen werden die Prüfkörper während 15 min bei Raumtemperatur im Dunkeln gelagert. Anschliessend wird mit einer Zugprüfmaschine (Tensometer) die Zugscherfestigkeit bis zum Bruch des Prüflings gemessen.

| Plattenmaterial | Zugscherfestigkeit* ($N/mm^2$) nach DIN 53 283 |
|---|---|
| PVC (hart, grau) | 5,5 - 6,5 |
| Polyamid (opak) | 2,0 - 3,0 |
| Polypropylen (hart, grau) | 1,6 - 2,0 |
| Polycarbonat (transparent) | 3,5 - 4,0 |
| Aluminium (Anticorodal 100B, 1,5 mm) | 5,2 - 5,9 |

* Werte aus drei Messungen

Beispiel 5

Dieses Beispiel illustriert die Härtung eines erfindungsgemässen Klebstoffs bei Tageslicht.
Es wird das im Beispiel 4 beschriebene Stoffgemisch verwendet, ausser dass statt dem 2-Isopropylthioxanthon 2-Methyl-6-ethoxycarbonylthioxanthon eingesetzt wird.
Zur Bestimmung der Zugscherfestigkeit von Glas/Aluminium-Verklebungen werden Prüfkörper analog wie in Beispiel 4 hergestellt. Die Aushärtung erfolgt durch die Glasplatte mit Tageslicht hinter Fensterglas unter gleichzeitiger Messung der eingestrahlten Energie mit einem UV-Radiometer. Die Beschrahlungszeit ist dabei stark von der jeweiligen Tageslichtintensität abhängig und beträgt zwischen 30 bis 5000 Sekunden. In der Tabelle sind die Zugscherfestigkeiten in Abhängigkeit von der eingestrahlten Energie aufgeführt.

| Lichtintensität ($W/cm^2$) | Zugscherfestigkeit* ($N/mm^2$) nach DIN 53 283 |
|---|---|
| 0,01 | 2,6 |
| 0,02 | 3,8 |
| 0,03 | 4,8 |
| 0,05 | 5,5 |
| 0,075 | 5,8 |
| 0,10 | 6,1 |
| 0,20 | 6,9 |

* Mittel aus drei Messungen

Beispiel 6

40 Gewichtsteile des im Beispiel 1 verwendeten Urethanacrylats

27 Gewichtsteile Isobornylacrylat

12 Gewichtsteile 1-Vinyl-2-pyrrolidon

20 Gewichtsteile des im Beispiel 1 verwendeten Butadien-Acrylnitril-Polymers

1 Gewichtsteil γ-Glycidoxypropyltrimethoxysilan

3 Gewichtsteile eines Photoinitiators der Formel

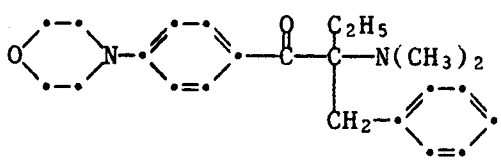

0,30 Gewichtsteile 2,4-Diethylthioxanthon

Zum Bestimmen der Haftfestigkeit unterschiedlicher Kunststoffolien/Karton-Verklebungen wird auf einen gelben Karton mit einem Spiralrakel ein Klebefilm von 50-100 µm Schichtdicke aufgetragen. Auf diesen Klebefilm wird die entsprechende Kunststoffolie aufgebracht und mit einer 8 mm dicken Flachglasscheibe belastet.

Die Aushärtung erfolgt durch Bestrahlen der Prüfkörper durch die Glasplatte mittels Leuchtstoffröhren des Typs TL05 (Philips) in einem Abstand von 4-6 cm. In der Tabelle sind die Belichtungszeiten angegeben, welche benötigt werden, um eine genügende Haftung (vgl. Beispiel 1) der Kunststoffolie auf Karton zu bewirken.

| Folienmaterial | Bestrahlungszeit (s) |
|---|---|
| PVC (0,35 mm) | 10 |
| PVC (UV-stabilisiert, 0,20 mm) | 20 |
| Polystyrol (0,30 mm) | 25 |
| Polyacrylnitril (0,40 mm) | 15 |

Beispiel 7

Das im Beispiel 1 beschriebene Stoffgemisch wird wie im Beispiel 6 beschrieben für die Herstellung von Kunststoff/Karton-Verklebungen (gelber Karton) verwendet und geprüft.

| Folienmaterial | Bestrahlungszeit (s) |
|---|---|
| PVC (0,35 mm) | 5,0 |
| PVC (UV-stabilisiert, 0,20 mm) | 15,0 |
| Polystyrol (0,30 mm) | 7,5 |
| Polyacrylnitril (0,40 mm) | 7,5 |

Beispiel 8

| | |
|---|---|
| 24 | Gewichtsteile des im Beispiel 1 beschriebenen Urethanacrylats |
| 35 | Gewichtsteile Isobornylacrylat |
| 20 | Gewichtsteile 1-Vinyl-2-pyrrolidon |
| 20 | Gewichtsteile des in Beispiel 1 beschriebenen Butadien-Acrylnitril-Polymers |
| 1 | Gewichtsteil $\gamma$-Glycidoxypropyltrimethoxysilan |
| 3 | Gewichtsteile des im Beispiel 6 beschriebenen Photoinitiators |
| 0,25 | Gewichtsteile 2-Chlorthioxanthon |

Das Klebstoffgemisch wird wie im Beispiel 1 beschrieben appliziert und die Haftfestigkeit verschiedener Kunststoffolien auf weissen Karton wird gemäss Beispiel 1 geprüft.

| Bestrahlungszeit (s) | Folienmaterial | |
|---|---|---|
| | PVC (0,35 mm) | Polystyrol (0,4 mm) |
| 2,10 | sehr gut | sehr gut |
| 1,05 | sehr gut | gut |
| 0,50 | sehr gut | genügend |
| 0,20 | sehr gut | genügend |

Beispiel 9

Es wird das im Beispiel 1 beschriebene Stoffgemisch verwendet mit der Ausnahme, dass 2,4-Diethylthioxanthon durch 2-Chlorthioxanthon ersetzt wird.
Zur Bestimmung der Haftfestigkeit auf blau bedrucktem Karton werden Prüfkörper gemäss Beispiel 1 hergestellt und geprüft.

| Folienmaterial | Fördergeschwindigkeit (m/min) | Bestrahlungszeit (s) |
|---|---|---|
| PVC (0,35 mm) | 60 | 0,35 |
| PVC (UV-stabilisiert, 0,20 mm) | 20 | 1,05 |
| Polystyrol (0,30 mm) | 30 | 0,75 |
| Polyacrylnitril (0,30 mm) | 30 | 0,75 |
| Polyethylenterephthalat (0,40 mm) | 40 | 0,52 |

Beispiel 10

Das im Beispiel 2 beschriebene Stoffgemisch wird gemäss Beispiel 4 zur Bestimmung der Zugscherfestigkeit von verschiedenen Glas/Kunststoffverklebungen verwendet (Kunststoffplatten von 3-4 mm Dicke/Glasplatte 8 mm).

| Plattenmaterial | Zugscherfestigkeit ($N/mm^2$) nach DIN 53 283 |
|---|---|
| ABS[1] (rot) | 5,0 - 5,8 |
| SMC[2] (weiss) | 5,5 - 6,5 |
| Polycarbonat (transparent) | 6,5 - 7,5 |
| Polypropylen (hart, grau) | 2,0 - 3,0 |
| Polyamid (opak) | 3,0 - 4,0 |
| PVC (hart, grau) | 5,5 - 6,5 |
| Aluminium (Anticorodal 100B, 1,5 mm) | 5,3 - 6,1 |

1: Propfpolymer von Acrylnitril und Styrol auf Butadienpolymer

2: Glasfaserlaminat hergestellt mit einer Formmasse aus ungesättigtem Polyester (Sheet Moulding Compound)

Beispiel 11

Das im Beispiel 2 beschriebene Stoffgemisch wird für das Verkleben von transparenten Polycarbonatfolien (0,17 mm dick), welche z.B. bei der Herstellung von ID-Karten Einsatz finden, verwendet. Dabei wird auf eine ca. 5 × 5 cm grosse Folie mit einer Spiralrakel ein homogener Film von 70-90 µm des Klebstoffs aufgetragen und mit einem zweiten 5 × 5 cm grossen Folienabschnitt ohne Lufteinschlüsse überdeckt, wobei beim Auftragen des Klebstoffs ein Streifen von ca. 1 cm über die ganze Folienbreite klebstofffrei bleibt. Die Folien werden mit einer 8 mm dicken Fensterglasscheibe belastet und anschliessend gehärtet. Die Härtung erfolgt durch Belichtung während 8 s mit einer Hochdruckquecksilberdampflampe von 80

W/cm in einem Minicure-Prüfgerät und einem Abstand von 5 bis 7 cm. Die Trennung von Hand der verklebten Folien ist bereits sofort nach der Härtung nicht mehr möglich.

Beispiel 12

Beispiel 5 wird wiederholt, wobei als Klebstoff das im Beispiel 2 beschriebene Stoffgemisch verwendet wird. Die Härtung erfolgt bei Tageslicht (sonniges Wetter). Die Belichtungszeit und die entsprechende gemessene Lichtintensität sind aus der Tabelle ersichtlich.

| Belichtungszeit (s) | Lichtintensität ($W/cm^2$) | Zugscherfestigkeit* ($N/mm^2$) nach DIN 53 283 |
|---|---|---|
| 30 | 0,01 | 2,3-2,8 |
| 150 | 0,05 | 4,2-4,8 |
| 300 | 0,10 | 5,3-5,8 |
| 600 | 0,20 | 6,0-7,0 |

* Werte aus drei Messungen

## Patentansprüche

**1.** Photopolymerisierbarer Klebstoff enthaltend

(a) 10 bis 60 Gewichtsteile eines oligomeren (Meth)Acrylats, wobei das oligomere Acrylat oder Methacrylat (a) mindestens eine, insbesondere mindestens zwei, Gruppen der Formel I

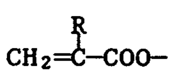

(I) enthält,

worin R Wasserstoff oder Methyl bedeutet, und welches ein Polyether-Acrylat, ein Polyester-Acrylat, ein Polyester-Urethan-Acrylat, ein Epoxidacrylat und insbesondere ein Urethan-Acrylat ist,

(b) 10 bis 50 Gewichsteile eines monomeren (Meth)Acrylats, wobei das monomere Acrylat oder Methacrylat (b) mindestens eine Gruppe der Formel I enthält und sich von aliphatischen, cycloaliphatischen, alicycloaliphatischen, araliphatischen oder heterocyclisch-aliphatischen ein- oder mehrwertigen Alkoholen; von Hydroxycarbonsäuren; von Hydroxyalkylaminen oder von Hydroxyalkylnitrilen ableitet.

(c) 5 bis 40 Gewichtsteile eines Flexibilisators,

(d) 0,1 bis 10 Gewichtsteile eines Silan-Haftvermittlers,

(e) 0,5 bis 10 Gewichtsteile eines $\alpha$-Aminoacetophenonderivats als Photoinitiator und

(f) 0,01 bis 5 Gewichtsteile eines Thioxanthonderivats als Photosensibilisator, wobei sich die Gesamtmenge der Komponenten (a) bis (f) und allenfalls weiterer Zusätze auf 100 Gewichtsteile ergänzt.

**2.** Klebstoff nach Anspruch 1, enthaltend 15 bis 40 Gewichtsteile der Komponente (a); 20 bis 40 Gewichtsteile der Komponente (b); 10 bis 30 Gewichtsteile der Komponente (c); 0,5 bis 5 Gewichtsteile der Komponente (d); 1 bis 6 Gewichtsteile der Komponente (e) und 0,1 bis 3 Gewichtsteile der Komponente (f), wobei sich die Gesamtmenge der Komponenten (a) bis (f) und allenfalls weiterer Zusätze auf 100 Gewichtsteile ergänzt.

**3.** Klebstoff nach Anspruch 1, welcher zusätzlich noch einen Reaktivverdünner, vorzugsweise 1-Vinyl-2-pyrrolidon, enthält.

4. Klebstoff nach Anspruch 1, worin der Flexibilisator (c) ein Elastomer oder ein thermoplastischer Kautschuk ist.

5. Klebstoff nach Anspruch 1, worin der Silan-Haftvermittler (d) eine Verbindung der Formel II

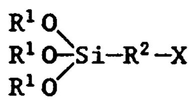

(II)

ist, worin $R^1$ unabhängig voneinander eine $C_1$-$C_4$-Alkyl- oder eine $C_3$-$C_{10}$-Alkoxyalkylgruppe, $R^2$ eine direkte Bindung oder eine $C_2$-$C_6$-Alkylengruppe und X einen reaktiven Rest ausgewählt aus den Gruppen $CH_2=CH$-,

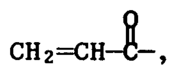, 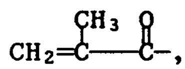,

HS-, $H_2N$-, $H_2NCH_2CH_2NH$-, HO-,

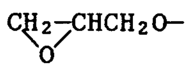 und 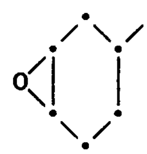

bedeuten.

6. Klebstoff nach Anspruch 1, worin der Photoinitiator (e) eine Verbindung der Formel III

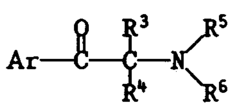

(III)

ist, worin Ar eine unsubstituierte oder durch einen oder mehrere der Reste Halogen, Hydroxyl, $C_1$-$C_4$-Alkyl, $C_1$-$C_4$-Alkoxy, $C_1$-$C_4$-Alkylthio, $C_1$-$C_4$-Alkylamino oder $C_1$-$C_4$-Dialkylamino oder N-Morpholino substituierte $C_6$-$C_{14}$-Arylgruppe, $R^3$ und $R^4$ unabhängig voneinander Wasserstoff, $C_1$-$C_8$-Alkyl, $C_5$-$C_6$-Cycloalkyl, $C_7$-$C_9$-Phenylalkyl und $R^5$ und $R^6$ unabhängig voneinander Wasserstoff, ein gegebenenfalls durch $C_1$-$C_4$-Alkoxygruppen substituiertes $C_1$-$C_8$-Alkyl, $C_5$-$C_6$-Cycloalkyl, $C_7$-$C_9$-Phenylalkyl sind oder $R^5$ und $R^6$ zusammen $C_3$-$C_7$-Alkylen bedeuten, das durch -O-, -S- oder -N($R^7$)- unterbrochen sein kann, und $R^7$ Wasserstoff oder $C_1$-$C_4$-Alkyl ist.

7. Klebstoff nach Anspruch 6, worin Ar für p-N-Morpholino-, p-$C_1$-$C_4$-Alkoxy- oder p-$C_1$-$C_4$-Alkylthiophenyl, insbesondere für p-Methoxy-oder p-Methylthiophenyl steht, $R^3$ und $R^4$ unabhängig voneinander $C_1$-$C_4$-Alkyl oder Benzyl und $R^5$ und $R^6$ jeweils Methyl oder zusammen mit dem Stickstoffatom, an das sie gebunden sind, einen N-Morpholinorest bedeuten.

8. Klebstoff nach Anspruch 1, worin der Photosensibilisator (f) ein durch ein oder mehrere Halogenatome oder durch eine oder mehrere $C_1$-$C_{12}$-Alkyl- oder $C_1$-$C_{12}$-Alkoxycarbonylgruppen substituiertes Thioxanthon ist.

9. Verwendung des Klebstoffes nach Anspruch 1 als im UV-und/oder im sichtbaren Bereich photohärtender Kleber.

**10.** Verfahren zum Verkleben zweier oder mehrerer Substrate, wovon mindestens ein Substrat für UV- und/oder sichtbares Licht durchlässig ist, wobei
(i) der Klebstoff nach Anspruch 1 auf mindestens eine zu verklebende Oberfläche aufgetragen wird,
(ii) die zu verklebenden Oberflächen miteinander kontaktiert werden,
(iii) die Anordnung gegebenenfalls zusammengepresst wird und
(iv) die Verklebung mittels Bestrahlung durch das für Strahlen durchlässige Material ausgehärtet wird.

## Claims

**1.** A photopolymerisable adhesive comprising
(a) 10 to 60 parts by weight of an oligomeric (meth)acrylate, where the oligomeric acrylate or methacrylate (a) contains at least one, in particular at least two, groups of the formula I

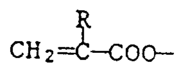 (I)

in which R is hydrogen or methyl, and is a polyether-acrylate, a polyester-acrylate, a polyester-urethane-acrylate, an epoxide-acrylate or in particular a urethane-acrylate,
(b) 10 to 50 parts by weight of a monomeric (meth)acrylate, where the monomeric acrylate or methacrylate (b) contains at least one group of the formula I and is derived from aliphatic, cycloaliphatic, alicycloaliphatic, araliphatic or heterocyclic aliphatic monohydric or polyhydric alcohols; from hydroxycarboxylic acids; from hydroxyalkylamines or from hydroxyalkyl nitriles,
(c) 5 to 40 parts by weight of a flexibiliser,
(d) 0.1 to 10 parts by weight of a silane adhesion promoter,
(e) 0.5 to 10 parts by weight of an $\alpha$-aminoacetophenone derivative as photoinitiator and
(f) 0.01 to 5 parts by weight of a thioxanthone derivative as photosensitiser, the total amount of the components (a) to (f) and any further additives adding up to 100 parts by weight.

**2.** An adhesive according to claim 1, comprising 15 to 40 parts by weight of the component (a); 20 to 40 parts by weight of the component (b); 10 to 30 parts by weight of the component (c); 0.5 to 5 parts by weight of the component (d); 1 to 6 parts by weight of the component (e) and 0.1 to 3 parts by weight of the component (f), the total amount of the components (a) to (f) and any further additives adding up to 100 parts by weight.

**3.** An adhesive according to claim 1, which, in addition, also contains a reactive diluent, preferably 1-vinyl-2-pyrrolidone.

**4.** An adhesive according to claim 1, wherein the flexibiliser (c) is an elastomer or a thermoplastic rubber.

**5.** An adhesive according to claim 1, wherein the silane adhesion promoter (d) is a compound of the formula II

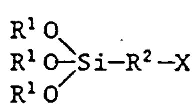 (II)

in which the $R^1$s independently of one another are a $C_1$-$C_4$alkyl group or a $C_3$-$C_{10}$alkoxyalkyl group, $R^2$ is a direct bond or a $C_2$-$C_6$-alkylene group and X is a reactive radical selected from the groups $CH_2=CH$-,

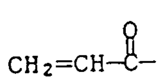 , 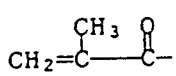 ,

HS-, $H_2N$-, $H_2NCH_2CH_2NH$-, HO-,

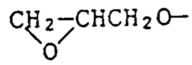

and

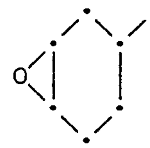

.

6. An adhesive according to claim 1, wherein the photoinitiator (e) is a compound of the formula III

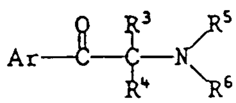

(III)

in which Ar is a $C_6$-$C_{14}$aryl group which is unsubstituted or substituted by one or more of the radicals halogen, hydroxyl, $C_1$-$C_4$alkyl, $C_1$-$C_4$alkoxy, $C_1$-$C_4$alkylthio, $C_1$-$C_4$alkylamino or $C_1$-$C_4$dialkylamino or N-morpholino, $R^3$ and $R^4$ independently of one another are hydrogen, $C_1$-$C_8$alkyl, $C_5$-$C_6$cycloalkyl or $C_{7-9}$phenylalkyl and $R^5$ and $R^6$ independently of one another are hydrogen or $C_1$-$C_8$alkyl, $C_5$-$C_6$cycloalkyl or $C_7$-$C_9$phenylalkyl, each of which is unsubstituted or substituted by $C_1$-$C_4$alkoxy groups, or $R^5$ and $R^6$ together are $C_3$-$C_7$alkylene which can be interrupted by -O-, -S- or -N($R^7$)-, and $R^7$ is hydrogen or $C_1$-$C_4$alkyl.

7. An adhesive according to claim 6, wherein Ar is p-N-morpholino-, p-$C_1$-$C_4$alkoxy- or p-$C_1$-$C_4$alkylthiophenyl, particularly p-methoxy- or p-methylthiophenyl, $R^3$ and $R^4$ independently of one another are $C_1$-$C_4$alkyl or benzyl and $R^5$ and $R^6$ are each methyl or, together with the nitrogen atom to which they are attached, are an N-morpholino radical.

8. An adhesive according to claim 1, wherein the photosensitiser (f) is a thioxanthone which is substituted by one or more halogen atoms or by one or more $C_1$-$C_{12}$alkylcarbonyl or $C_1$-$C_{12}$-alkoxycarbonyl groups.

9. Use of an adhesive according to claim 1 as an adhesive that is cured by UV and/or visible light.

10. A process for bonding two or more substrates at least one of which is a substrate transparent to UV and/or visible light, wherein
(i) the adhesive according to claim 1 is applied to at least one surface to be bonded,
(ii) the surfaces to be bonded are brought into contact with one another,
(iii) the arrangement is compressed, if necessary, and
(iv) the bond is cured by means of irradiation through the material transparent to radiation.

**Revendications**

1. Adhésif photopolymérisable, contenant :
(a) 10 à 60 parties en poids d'un (méth)acrylate oligomère, l'acrylate ou le méthacrylate oligomère (1a) contenant au moins un, et en particulier au moins deux groupes de formule I

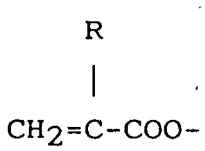

(I)

dans laquelle R est un hydrogène ou le radical méthyle, et qui est un polyéther-acrylate, un polyester-acrylate, un polyester-uréthane-acrylate, un époxyde-acrylate et en particulier un uréthane-acrylate,

(b) 10 à 50 parties en poids d'un (méth)acrylate, où l'acrylate ou le méthacrylate monomère (b) contient au moins un groupe de formule I et dérive de mono- ou polyalcools aliphatiques, cycloaliphatiques, alicycloaliphatiques, araliphatiques ou hétérocycliques-aliphatiques ; d'acides hydroxycarboxyliques ; d'hydroxyalkylamines ou d'hydroxyalkylnitriles,
(c) 5 à 40 parties en poids d'un flexibilisateur,
(d) 0,1 à 10 parties en poids d'un promoteur d'adhérence à base d'un silane,
(e) 0,5 à 10 parties en poids d'un dérivé de l'$\alpha$-aminoacétophénoneservant de photoamorceur et
(f) 0,01 à 5 parties en poids d'un dérivé de la thioxanthone servant de photosensibilisateur,

le total des composants (a) à (f), complété éventuellement par d'autres additifs, atteignant 100 parties en poids.

**2.** Adhésif selon la revendication 1, contenant 15 à 40 parties en poids du composant (a) ; 20 à 40 parties en poids du composant (b) ; 10 à 30 parties en poids du composant (c) ; 0,5 à 5 parties en poids du composant (d) ; 1 à 6 parties en poids du composant (e) et 0,1 à 3 parties en poids du composant (f) ; la quantité totale des composants (a) à (f), complétée par d'éventuels autres additifs, atteignant 100 parties en poids.

**3.** Adhésif selon la revendication 1, qui contient en outre encore un diluant réactif, de préférence la vinyl-1 pyrrolidone-2.

**4.** Adhésif selon la revendication 1, dans lequel le flexibilisateur (c) est un élastomère ou un caoutchouc thermoplastique.

**5.** Adhésif selon la revendication 1, dans lequel le silane promoteur d'adhérence (d) est un composé de formule II

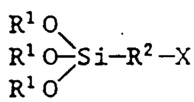

(II)

dans laquelle les radicaux $R^1$, indépendamment les uns des autres, représentent chacun un groupe alkyle en $C_1$-$C_4$ ou alcoxyalkyle en $C_3$-$C_{10}$, $R^2$ est une liaison directe ou un groupe alkylène en $C_2$-$C_6$, et X est un radical réactif choisi parmi les groupes $CH_2=CH$-,

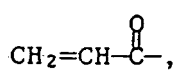, 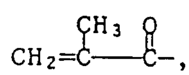,

HS-, $H_2N$-, $H_2NCH_2CH_2NH$-, HO-,

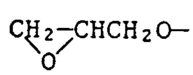

et

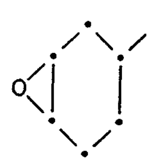

**6.** Adhésif selon la revendication 1, dans lequel le photoamorceur (e) est un composé de formule III

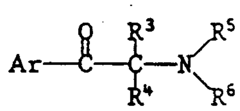

(III)

dans laquelle Ar est un groupe aryle en $C_6$-$C_{14}$ non substitué, ou substitué par un ou plusieurs des groupements halogéno, hydroxyle, alkyle en $C_1$-$C_4$, alcoxy en $C_1$-$C_4$, alkylthio en $C_1$-$C_4$, alkylamino en $C_1$-$C_4$ ou dialkylamino en $C_1$-$C_4$ ou N-morpholino, $R^3$ et $R^4$, indépendamment l'un de l'autre, sont chacun un hydrogène, un radical alkyle en $C_1$-$C_8$,cycloalkyle en $C_5$-$C_6$, phénylalkyle en $C_7$-$C_9$, et $R^5$ et $R^6$, indépendamment l'un de l'autre, sont chacun un hydrogène, un radical alkyle en $C_1$-$C_8$, cycloalkyle en $C_5$-$C_6$ ou phénylalkyle en $C_7$-$C_9$ éventuellement substitué par des groupes alcoxy en $C_1$-$C_4$, ou encore $R^5$ et $R^6$ forment ensemble un groupement alkylène en $C_3$-$C_7$ pouvant être interrompu par -O-, -S- ou -N(R )-, et $R^7$ est un hydrogène ou un radical alkyle en $C_1$-$C_4$.

**7.** Adhésif selon la revendication 6, dans lequel on préfère en particulier les composés de formule III dans laquelle Ar est un radical p-N-morpholino-, p-alcoxy en $C_1$-$C_4$- ou p-alkyle en $C_1$-$C_4$-thiophényle, en particulier p-méthoxy- ou p-méthylthiophényle, $R^3$ et $R^4$, indépendamment l'un de l'autre, sont chacun un radical alkyle en $C_1$-$C_4$ ou benzyle, et $R^5$ et $R^6$ sont chacun un radical méthyle ou forment avec l'atome d'azote auquel ils sont liés un radical N-morpholino.

**8.** Adhésif selon la revendication 1, dans lequel le photosensibilisateur (f) est une thioxanthone substituée par un ou plusieurs atomes d'halogène ou par un ou plusieurs groupes alkyle en $C_1$-$C_{12}$ ou (alcoxy en $C_1$-$C_{12}$)-carbonyle.

**9.** Utilisation de l'adhésif selon la revendication 1 en tant qu'adhésif photodurcissable dans les UV et/ou le visible.

**10.** Procédé pour coller au moins deux substrats, au moins l'un des substrats étant transparent à la lumière UV et/ou visible, auquel cas

(i) l'adhésif selon l'invention est appliqué sur au moins l'une des surfaces à coller,

(ii) les surfaces à coller sont mises en contact l'une avec l'autre,

(iii) l'ensemble est éventuellement soumis à une pression, et

(iv) la liaison collée est durcie par exposition, à un rayonnement, du matériau transparent aux rayons.